# EUROPÄISCHE PATENTSCHRIFT

(11) **EP 0 546 259 B1**
(45) Veröffentlichungstag und Bekanntmachung des Hinweises auf die Patenterteilung: **05.03.1997**
(21) Anmeldenummer: 92113861.6
(22) Anmeldetag: 14.08.1992
(51) Int. Cl.: G02B 6/44

(54) **Flugkörper mit Spulenkörper aus optischen Fasern**
Missile with bobbin comprising optical fibres
Missile avec une bobine comprenant des fibres optiques

(30) Priorität: 13.12.1991 DE 4141054
(43) Veröffentlichungstag der Anmeldung: 16.06.1993
(73) Patentinhaber: Daimler-Benz Aerospace Aktiengesellschaft, 81663 München (DE)
(72) Erfinder: Hoessle, Wolfgang, Dr., W-8012 Riemerling (DE)

(56) Entgegenhaltungen:
- EP-A- 0 342 663
- EP-A- 0 454 345
- WO-A-90/05929
- DE-A- 3 025 321
- DE-A- 3 224 489
- US-A- 4 776 664

## Beschreibung

Die Erfindung bezieht sich auf einen Flugkörper nach dem Oberbegriff des Patentanspruchs 1.

Es ist bekannt, zur Lenkung von Flugkörpern aus Gründen einer hohen Übertragungsbandbreite bei zugleich sehr niedriger Dämpfung Lichtwellenleiter zu verwenden, durch die sich Bild- und Zustandsdaten in Echtzeit vom Flugkörper zum Boden und gleichzeitig in Gegenrichtung Lenk- und Schaltkommandos über eine Entfernung von 100 km oder mehr übertragen lassen. Dabei wird der Lichtwellenleiter, der aus einer Glasfaser und einer diese zum Schutz vor Feuchtigkeit und mechanischen Verletzungen umschließenden Beschichtung, zumeist aus Acryl, besteht und einen Gesamtdurchmesser von etwa 250 µm aufweist. üblicherweise vom Flugkörper in Form eines am Heckende feststehenden Wickelkörpers mitgeführt und von diesem während des Fluges in Axialrichtung des Wickelkörpers abgespult. Um zu verhindern, daß sich der Wickelkörper beim Abspulvorgang in einzelne Wickellagen auflöst, muß der Lichtwellenleiter unter ausreichend hoher Zugspannung - und gewöhnlich auch noch unter Zuhilfenahme eines Haftklebers - auf den Wickelkörper gewickelt sein, was an den Kreuzungsstellen übereinanderliegender Wickellagen infolge der punktförmigen Anlage zu örtlichen Druckspannungsspitzen führt. Zusätzlich ist die Glasfaser beim Abspulen während des Flugs starken Biege- und vor allem Zugbelastungen ausgesetzt, zumal die Acrylbeschichtung wegen ihres im Vergleich zu Glas niedrigen Elastizätsmoduls nicht zur Erhöhung der Zugfestigkeit beiträgt, sondern aufgrund ihrer zusätzlichen Masse eher die Reißlänge des Lichtwellenleiters vermindert. Infolgedessen kommt es bei höheren Abzugsgeschwindigkeiten häufig zu mikrofeinen Oberflächenrissen der Glasfaser oder gar zu einem Knickbruch oder einem vollständigen Abreißen des Lichtwellenleiters und damit zu einer Unterbrechung, zumindest aber erheblichen Beeinträchtigungen der optischen Signalübertragung.

Ferner ist es bekannt, den Lichtwellenleiter durch eine Zusatzumspinnung aus unidirektional in Lichtwellenleiter-Längsrichtung verlaufenden Zugfäden, z.B. aus Kevlar, zu verstärken (EP 01 92 570 A 1). Hierdurch aber erhöht sich der Außendurchmesser des Lichtwellenleiters auf etwa das Doppelte und die längenbezogene Masse vervierfacht sich, so daß diese Maßnahme, vor allem bei größeren Lichtleiterlängen, mit einer erheblichen Gewichts- und Volumenzunahme verbunden und zum Schutz vor störenden Rißbildungen in der Glasfaser nur in begrenztem Umfang geeignet ist.

Ein weiteres Beispiel für einen Flugkörper mit Spulenkörper ist aus EP-A-342 663 bekannt.

Demgegenüber ist es Aufgabe der Erfindung, einen Flugkörper der eingangs genannten Art mit einem Lichtwellenleiter zur Signalübertragung so auszubilden, daß auf baulich einfache Weise und auch ohne Volumenvergrößerung des Wickelkörpers eine deutliche Entlastung der Glasfaser und dadurch ein wirksamer Schutz gegen eine funktionsgefährdende Rißbildung gewährleistet wird.

Diese Aufgabe wird erfindungsgemäß durch den im Patentanspruch 1 gekennzeichneten Flugkörper gelöst.

Bei dem erfindungsgemäßen Flugkörper besitzt der Lichtwellenleiter eine für das Abziehen von der flugkörperfesten Wickelspule optimale Querschnittskonfiguration: Zum einen nämlich wird durch die besondere Materialverteilung der Beschichtung an den aufgedickten Eckzonen beim axialen Abspulvorgang, also wenn der Lichtleiter um seine Längsachse jeweils einmal je abgezogene Spulenwindung verdrillt wird, eine erhöhte und im Vergleich zu einem flächengleichen Kreisquerschnitt wesentlich stärkere Materialdehnung erzielt, so daß die Beschichtung selbst bei einem geringeren Elastizitätsmodul als Glas voll in die Zugkraftübertragung einbezogen und dadurch die Lichtübertragungsfaser von rißgefährdenden Überspannungen wirksam entlastet wird, und zum anderen wird eine punktuelle Druckbelastung des Lichtwellenleiters in der Wickelspule und die dadurch induzierte Dämpfungszunahme der optischen Übertragung durch den gegenseitigen Flächenkontakt übereinanderliegender Wickellagen verhindert und sichergestellt, daß die einzelnen Spulenwindungen unter der Wirkung der Wickelspannung nicht in die Rillen der darunterliegenden Wickellage gedrückt und dort eingeklemmt werden können.

Mit dem erfindungsgemäß ausgebildeten Lichtwellenleiter wird daher auf überraschend einfache Weise eine gleichbleibend breitbandige Signalübertragung mit sehr niedriger Dämpfung selbst bei hohen Fluggeschwindigkeiten und großen Übertragungsstrecken zwischen Flugkörper und Bodenstation garantiert.

Aus Herstellungsgründen besitzt die Beschichtung gemäß Anspruch 2 vorzugsweise eine quadratische Außen- und eine dem Querschnitt der Glasfaser entsprechend kreisförmige Innenkontur.

In besonders bevorzugter Ausgestaltung der Erfindung sind gemäß Anspruch 3 in der Beschichtung Faserverstärkungen eingebettet, die nach Anspruch 4 zweckmäßigerweise in den Eckbereichen der Beschichtung angeordnet sind, wodurch unter Beibehalt einer geringen Querschnittsfläche der Beschichtung eine noch weitergehende Zugkraftentlastung der Glasfaser erreicht wird, wobei die örtlich auf die Eckbereiche beschränkten Faserverstärkungen im Hinblick auf eine hochgradig lastgerechte Ausbildung der Beschichtung gemäß Anspruch 5 vorzugsweise unidirektional in Längsrichtung des Lichtwellenleiters verlaufen und zweckmäßigerweise einen höheren Elastizitätsmodul als die Lichtübertragungsfaser besitzen, also vorzugsweise nach Anspruch 6 aus Kevlar- und/oder Carbonfasern bestehen.

Wie bereits erwähnt, ist der Spulenkörper vorzugsweise nach Anspruch 7 drehfest angeordnet und der Lichtwellenleiter wird während des Fluges in Axialrichtung des Spulenkörpers abgezogen, wobei sich als weiterer Vorteil der rechteckigen Querschnittsgeometrie der Beschichtung ergibt, daß die einzelnen Lichtwellenleiterwindungen des Spulenkörpers - anders als bei einer kreis- oder ellipsenförmigen Querschnittskontur - ausreichend große gegenseitige Kontaktflächen für eine zur Stabilisierung des Spulenkörpers nach Anspruch 8 bevorzugte Haftverklebung besitzten.

Die Erfindung wird nunmehr anhand eines Ausführungsbeispiels in Verbindung mit den Zeichnungen näher erläutert. Es zeigen in stark schematisierter Darstellung:
- **Fig. 1**: den Querschnitt eines Lichtwellenleiters mit einer faserverstärkten Beschichtung und einer quadratischen Außenkontur;
- **Fig. 2**: den Lichtwellenleiter gemäß Fig. 1 im aufgewickelten Zustand; und
- **Fig. 3**: den Lichtwellenleiter beim axialen Abziehen von den am hinteren Zugkörperende feststehend angeordneten Wickelkörper während des Fluges.

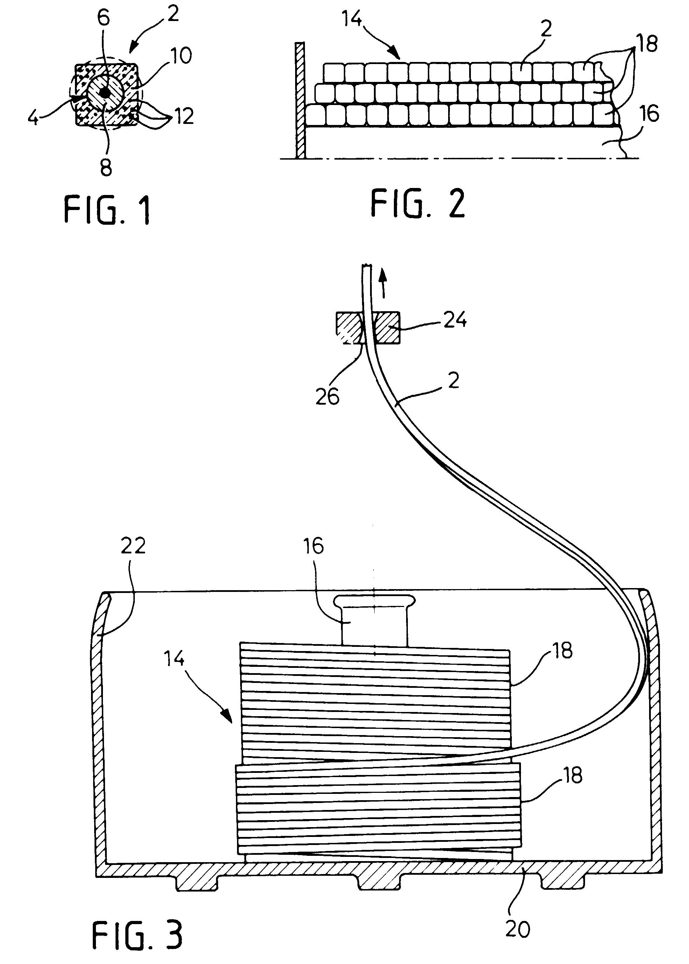

Gemäß Fig. 1 besteht der Lichtwellenleiter 2 aus einer lichtsignalübertragenden, im Querschnitt kreisförmigen Glasfaser 4, die in üblicher Weise durch einen zentralen Glaskern 6 und einen diesen ringförmig umschließenden Glasmantel 8 gebildet wird, sowie einer auf den Glasmantel 8 zum Schutz der Glasfaser 4 vor Feuchtigkeit und mechanischen Verletzungen aufgebrachten Beschichtung 10, etwa aus Acryl.

Die Acrylbeschichtung 10 besitzt eine im Querschnitt quadratische Außenkontur, und in die Eckbereiche erhöhter Wandstärke sind Verstärkungsfäden 12 eingelagert, die einen höheren Elastizitätsmodul als die Glasfaser 4 besitzen, also etwa aus Kevlar- oder Garbonfasern bestehen, während die zwischen den faserverstärkenden Eckzonen der Beschichtung 10 liegenden Bereiche geringerer Wandstärke faserfrei gehalten sind.

Verglichen mit einer - in Fig. 1 gestrichelt dargestellten - Beschichtung gleicher Querschnittsfläche, aber kreisförmiger Außenkontur besitzen die Eckbereiche der Beschichtung 10 einen größeren Radialabstand zur zentralen Lichtleiter-Längsachse, so daß die Eckbereiche bei dem weiter unten erläuterten Abziehvorgang, also wenn der Lichtwellenleiter 2 einmal je abgezogener Spulenwindung um seine Längsachse verdrillt wird, stärker als bei einem flächengleichen Kreisquerschnitt gestreckt werden und daher einen erheblich höheren Anteil der auf den Lichtwellenleiter 2 einwirkenden Zugbelastung übernehmen.

In Fig. 2 ist ausschnittsweise ein Spulenkörper 14 dargestellt, der durch hin- und hergehendes Endlosbewickeln des Spulenkerns 16 in mehreren übereinanderliegenden Wickellagen 18 aus dem in Fig. 1 gezeigten Lichtwellenleiter 2 unter Wickelspannung hergestellt wird. Wie ersichtlich, stehen die einzelnen Windungen des Spulenkörpers 14 aufgrund der Rechteckkontur der Beschichtung 10 in zueinander flächigem Kontakt, so daß punktuelle Druck- oder Biegebelastungen in den unter Wickelspannung stehenden Wickellagen 18, die die Übertragungsqualität des Lichtwellenleiters 2 gefährden könnten, an den Kreuzungsstellen übereinander liegender Spulenwindungen, im Gegensatz zu einem Lichtwellenleiter mit Rundprofil, entfallen und auch die Gefahr, daß eine Einzelwindung in eine Rille zwischen zwei darunter liegende Spulenwindungen gedrückt und dort eingeklemmt wird, wirksam ausgeschlossen wird.

Zur Stabilisierung des Spulenkörpers 14 werden die Spulenwindungen miteinander haftverklebt, wobei durch den gegenseitigen Flächenkontakt eine einwandfreie Verklebung sichergestellt wird.

Fig. 3 zeigt den Spulenkörper 14, der über eine Grundplatte 20 feststehend am hinteren Ende eines Flugkörpers (nicht gezeigt) angeordnet ist, beim axialen Abziehen des Lichtwellenleiters 2 während des Fluges. Dabei vollzieht der Lichtwellenleiter 2 im Bereich des Spulenkörpers 14 eine Rotationsbewegung um die Spulenkörperachse, nämlich einmal je abgezogener Spulenwindung, so daß er unter der daraus resultierenden Fliehkraftwirkung im wesentlichen tangential zum momentanen Abzugspunkt am Spulenkörper 14 radial nach außen in Richtung einer den Spulenkörper 14 ringförmig mit Abstand umschließenden Spulenhaube 22 aufsteigt, von wo er nach hinten, evtl. über ein Führungsstück 24 mit einer gerundeten Übermaß-Führungsbohrung 26, abläuft. Die Rotationsbewegung um die Spulenkörperachse hat zur Folge, daß der Lichtwellenleiter 2 pro abgezogener Spulenwindung jeweils einmal, d.h. um 360°, um seine Längsachse verdrillt wird, woraus sich die oben geschilderte, erhöhte Streckung in den Eckzonen der Beschichtung 10 ergibt.

In der praktischen Ausführung hat der Lichtwellenleiter 2 eine Kantenlänge von etwa 250 µm und wird bei einer Gesamtlänge von 100 km zu einem Spulenkörper 14 gewickelt, der beispielsweise aus dreißig Wickellagen besteht und einen Außendurchmesser von 50 cm und eine Länge von ebenfalls 50 cm besitzt, wobei die während des Fluges erreichten Beschleunigungen zwischen 10 und 70 g und die Abzugsgeschwindigkeiten bei etwa 700 km/h liegen können.

## Patentansprüche

1. Flugkörper mit einem Spulenkörper aus gewickelten und von diesem während des Fluges abziehbaren, mit einer Beschichtung versehenen Lichtwellenleiter zur Signalübertragung, wobei die Beschichtung direkt auf dem Lichtwellenleiter (4) aufgebrachtist
**dadurch gekennzeichnet, daß**
die Beschichtung (10) des Lichtwellenleiters (2) eine rechteckförmige Außenkontur und einen im Querschnitt ungleichförmigen, in den Eckbereichen der Beschichtung aufgedickten Wandstärkenverlauf besitzt.

2. Flugkörper nach Anspruch 1,
**dadurch gekennzeichnet, daß**
die Beschichtung (10) eine quadratische Außen- und eine kreisförmige Innenkontur besitzt.

3. Flugkörper nach Anspruch 1 oder 2,
**dadurch gekennzeichnet, daß**
in die Beschichtung (10) Faserverstärkungen (12) eingebettet sind.

4. Flugkörper nach Anspruch 3,
**dadurch gekennzeichnet, daß**
die Faserverstärkungen (12) in den Eckbereichen der Beschichtung (10) angeordnet sind.

5. Flugkörper nach Anspruch 3 oder 4,
**dadurch gekennzeichnet,** daß
die Faserverstärkungen (12) eine in Längsrichtung des Lichtwellenleiters (2) unidirektionale Faserorientierung aufweisen.

6. Flugkörper nach einem der Ansprüche 3 bis 5,
**dadurch gekennzeichnet,** daß
die Faserverstärkungen (12) aus Kevlar- und/oder Carbonfasern bestehen.

7. Flugkörper nach einem der vorhergehenden Ansprüche,
**dadurch gekennzeichnet,** daß
der Spulenkörper (14) drehfest angeordnet und der Lichtwellenleiter (2) während des Fluges in Axialrichtung des Spulenkörpers abziehbar ist.

8. Flugkörper nach einem der vorhergehenden Ansprüche,
**dadurch gekennzeichnet,** daß
die Lichtwellenleiterwindungen des Spulenkörpers (14) an ihren gegenseitigen Kontaktflächen miteinander haftverklebt sind.

## Claims

1. A missile having a coil body which comprises wound optical fibres which are provided with a coating and which can be pulled off from the coil body during flight, for signal transmission,
**characterised in that**
the coating (10) of the optical fibre (2) has a rectangular external contour and a wall thickness progression which is non-uniform in cross-section and is thickened in the corner regions of the coating.

2. A missile according to claim 1,
**characterised in that**
the coating (10) has a square external contour and a circular internal contour.

3. A missile according to claim 1 or 2,
**characterised in that**
fibre reinforcements (12) are embedded in the coating (10).

4. A missile according to claim 3,
**characterised in that**
the fibre reinforcements (12) are disposed in the corner regions of the coating (10).

5. A missile according to claim 3 or 4,
**characterised in that**
the fibre reinforcements (12) have a unidirectional fibre orientation in the longitudinal direction of the optical fibre (2).

6. A missile according to any one of claims 3 to 5,
**characterised in that**
the fibre reinforcements (12) consist of Kevlar and/or carbon fibres.

7. A missile according to any one of the preceding claims,
**characterised in that**
the coil body (14) is disposed rotationally fixed and the optical fibre (2) can be pulled off in the axial direction of the coil body during flight.

8. A missile according to any one of the preceding claims,
**characterised in that**
the optical fibre windings of the coil body (14) are adhesively bonded to each other at their mutual contact faces.

## Revendications

1. Missile comportant un élément bobiné formé d'une fibre optique pourvue d'un revêtement, destinée à la transmission de signaux, qui est enroulée en bobine et peut être dévidée pendant le vol du missile, le revêtement étant appliqué directement sur la fibre optique (4), caractérisé par le fait que le revêtement (10) de la fibre optique (2) a une forme extérieure quadrangulaire et une épaisseur en section transversale non constante, plus forte dans la région des angles.

2. Missile selon la revendication 1, caractérisé par le fait que le revêtement (10) a une forme extérieure quadrangulaire et une forme intérieure circulaire.

3. Missile selon la revendication 1 ou 2, caractérisé par le fait que des renforts (12) par fibres sont noyés dans le revêtement (10).

4. Missile selon la revendication 3, caractérisé par le fait que les renforts (12) par fibres sont disposés dans la région des angles du revêtement (10).

5. Missile selon la revendication 3 ou 4, caractérisé par le fait que les renforts (12) par fibres présentent une orientation unidirectionnelle des fibres, dans la direction longitudinale de la fibre optique (2).

6. Missile selon l'une des revendications 3 à 5, caractérisé par le fait que les renforts (12) par fibres sont formés de fibres de Kelvar et/ou de fibres de carbone.

7. Missile selon l'une des revendications précédentes, caractérisé par le fait que l'élément bobiné (14) est monté fixe en rotation et que la fibre optique (2) est dévidée dans la direction axiale de l'élément bobiné pendant le vol.

8. Missile selon l'une des revendications précédentes, caractérisé par le fait que les spires de fibre optique de l'élément bobiné (14) sont collées entre elles au niveau de leurs surfaces de contact mutuel par une masse faiblement adhésive.
